# NEUE EUROPÄISCHE PATENTSCHRIFT

(11) **EP 2 363 640 B2**
(45) Veröffentlichungstag und Bekanntmachung des Hinweises auf die Entscheidung über den Einspruch: **24.02.2021**
(45) Hinweis auf die Patenterteilung: 31.08.2016
(21) Anmeldenummer: 10194324.9
(22) Anmeldetag: 09.12.2010
(51) Int. Cl.: F22B 1/28, A47J 27/04

(54) **Dampferzeugungssystem für ein Haushaltsgerät und Verfahren zum Montieren eines solchen Dampferzeugungssystems**
System for generating steam for a domestic appliance and method for mounting such a steam generation system
Système de production de vapeur pour un appareil ménager et procédé de montage d'un tel système de production de vapeur

(30) Priorität: 22.12.2009 DE 102009055148
(43) Veröffentlichungstag der Anmeldung: 07.09.2011
(73) Patentinhaber: BSH Hausgeräte GmbH, 81739 München (DE)
(72) Erfinder: Bosch, Werner, 83342 Tacherting (DE); Hasslberger, Robert, 83324 Ruhpolding (DE); Schmidt, Markus, 83377 Vachendorf (DE)

(56) Entgegenhaltungen:
- EP-A1- 1 724 529
- EP-B1- 1 702 542
- WO-A2-2008/025217
- DE-T2-602005 003 267
- FR-A1- 2 586 922
- JP-A- 2007 303 735
- US-A- 5 869 812
- US-A1- 2004 159 648
- US-A1- 2005 056 634
- US-A1- 2006 096 970

## Beschreibung

Die Erfindung betrifft ein Dampferzeugungssystem für ein Haushaltsgerät, mindestens aufweisend ein Wasserreservoir, mindestens einen Verdampfer, insbesondere Durchlauferhitzer, der von dem Wasserreservoir mit Wasser versorgbar ist, und mindestens eine Wasserdurchlasssteuereinrichtung, mittels welcher ein Wasserstrom von dem Wasserreservoir zu dem Verdampfer steuerbar ist. Die Erfindung betrifft ferner ein Verfahren zum Montieren eines solchen Dampferzeugungssystems.

DE 10 2007 024 007 A1 betrifft einen Dampfgenerator für ein Nahrungsmittelbehandlungsgerät, insbesondere für ein Dampfgargerät, zur zumindest teilweisen Verdampfung zumindest einer Flüssigkeit, insbesondere Wasser, umfassend zumindest einen Kessel mit zumindest einem zumindest teilweise mit der Flüssigkeit befüllbaren Kesselinnenraum, zumindest einem Flüssigkeitseinlass zur Zuführung von Flüssigkeit in den Kesselinnenraum, zumindest einer Heizeinrichtung zur Erhitzung von Flüssigkeit, und zumindest einem Ablauf, wobei der Ablauf zur Einstellung zumindest eines vorgegebenen Flüssigkeitsfüllstands in dem Kesselinnenraum verschließbar ist und der Dampfgenerator ferner zumindest eine zumindest bereichsweise in dem Kesselinnenraum angeordnete Zerkleinerungseinrichtung zur Zerkleinerung von Verunreinigungsfestkörpern umfasst, sowie ein Nahrungsmittelbehandlungsgerät, umfassend einen solchen Dampfgenerator.

JP-A- 2007303735 offenbart einen Heißdampfgenerator, bestehend aus einem metallischen Rohr, in dem das Wasser und der Dampf zirkulieren, eine inneren Mantelheizer und einen äußeren Mantelheizer, die Wärme erzeugen, und Aluminium als ein Wärmeübertragungsmittel Element zum Übertragen der von dem inneren Mantelheizer und dem äußeren Mantelheizer erzeugten Wärme zu dem metallischen Rohr. Das metallische Rohr weist einen einlassseitigen Zirkulationskanalteil, in dem Flüssigkeit in einer Richtung fließt, und einen auslassseitigen Zirkulationskanalteil, in dem das Fluid in der Richtung entgegengesetzt zu der in dem einlassseitigen Zirkulationskanalteil strömt.

US 2004/0159648 A1 offenbart eine Backvorrichtung zum Backen von Nahrungsmittelmischungen oder dergleichen in einem Ofen unter Verwendung von Dampf und elektrischer Energie. Die Vorrichtung umfasst ein Dampfelement und ein elektrisches Heizelement, die mit einer Zeitsteuerungseinheit verbunden sind, und einen Lüfter, der Wärme in dem Ofen verteilt.

FR 2 586 922 offenbart eine Vorrichtung zur Zubereitung von Speisen mit einem Motorgehäuse, indem ein Elektromotor untergebracht ist, der über eine Welle ein Lüfterrad antreibt, mit einem abnehmbaren Behälter, in dem das Lüfterrad angeordnet ist und der einen abnehmbaren Deckel zum Verschließen des Behälters aufweist. Weiterhin sind ein Dampferzeuger und ein Rohr, das Dampf in den unteren Teil des Behälters führt, vorhanden.

US 2006/0096970 A1 offenbart einen Dampferzeuger für einen Dampfofen, aufweisend eine Wassereinspritzeinrichtung zur Zuführen von Wasser von einer Umgebung des Dampferzeuger dort hindurch, einen aussenseitig eines Garraums installierten Wassertank zum Aufnehmen des zugeführten Wassers, eine Flussanpassungseinheit, die an einem Auslass des Wassertanks zum Anpassen eines zugeführten Wasservolumens installiert ist, ein Dampfrohr, das zwischen der Flussanpassungseinheit und dem Garraum vorhanden ist und das dazu vorgesehen ist. Wasser in Dampf umzuwandeln und den Dampf dem Garraum zuzuführen, und eine in dem Dampfrohr installierte Heizung zum Heizen des darin befindlichen Wassers.

Es ist die **Aufgabe** der vorliegenden Erfindung, die Nachteile des Standes der Technik zumindest teilweise zu beseitigen und insbesondere ein besonders kompaktes und einfach zu montierendes Dampferzeugungssystem bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Haushaltsgerät mit einem Dampferzeugungssystem gemäß Anspruch 1, mindestens aufweisend eine Wasserversorgung, mindestens einen Verdampfer in Form eines Durchlauferhitzers, der von der Wasserversorgung mit Wasser (mit oder ohne Zusätze) versorgbar ist, und mindestens eine Wasserdurchlasssteuereinrichtung, mittels welcher ein Wasserstrom von der Wasserversorgung zu dem Verdampfer steuerbar ist. Das Dampferzeugungssystem verläuft zumindest teilweise an einer Wand des Haushaltsgeräts und weist dort einen im Wesentlichen aufrecht stehenden V-förmigen bis U-förmigen Verlauf auf. Dadurch kann das Dampferzeugungssystem über eine Fläche der Wand verteilt werden und eine Bautiefe verkleinert werden. Zudem ist die Wand leicht zugänglich, so dass eine Montage im Vergleich zu über die Tiefe verteilten und ggf. durch Wände abgeteilten Dampferzeugungssystemen vereinfacht wird.

Durch den (bei Ansicht im Wesentlichen direkt bzw. senkrecht auf die Wand) im Wesentlichen V-förmigen bis U-förmigen Verlauf wird zudem eine Montage des Dampferzeugungssystems vereinfacht, da die Komponenten vergleichsweise weit auseinander gezogen positioniert sind und sich so bei einer Montage nicht behindern. Zudem lässt der V-förmige bis U-förmige Verlauf (welcher insbesondere einen im Wesentlichen V-förmigen Verlauf, einen im Wesentlichen U-förmigen Verlauf und einen teilweise V-förmigen und teilweise U-förmigen Verlauf umfasst) einen mittigen Bereich der Wand frei, z.B. für eine Montage weiterer Bauteile des Haushaltsgeräts. Auch ermöglicht es der im Wesentlichen V-förmige bis U-förmige Verlauf, dass der Verdampfer ein Einlassende in einem unteren Teil des Verlaufs aufweisen kann und so für eine Steuerung einer Wasserzufuhr zu dem Verdampfer ein Ventil anstelle einer Pumpe ausreichen kann, falls gewünscht. Auch ist eine Wartung aufgrund der vergleichsweise guten Zugänglichkeit und stabilen Befestigung der Komponenten einfach durchführbar.

Durch den im Wesentlichen aufrecht stehenden V-förmigen bis U-förmigen Verlauf können ein Wasserfluss und ein Dampffluss mit einfachen Mitteln gesteuert werden.

Darüber hinaus weist die Wasserversorgung ein Wasserreservoir auf, wobei der mindestens eine Verdampfer tiefer angeordnet ist als das Wasserreservoir und tiefer angeordnet ist als der Dampfeinlass, wobei das Wasserreservoir oberhalb des Behandlungsraums angeordnet ist. Dies ermöglicht z.B. eine schnell ansprechende Steuerung der Wasserzufuhr zu dem Verdampfer, und zwar auch durch das Ventil. Der Dampfeinlass wiederum liegt höher als der Verdampfer, um einen Dampffluss nicht zu behindern und eine Kondensation des Wasserdampfs zu unterdrücken. Dies ist besonders vorteilhaft für den Fall, dass die Wasserdurchlasssteuereinrichtung ein Ventil ist.

Mittels des Verdampfers wird typischerweise ihm zugeführtes Wasser in Wasserdampf umgewandelt. Der Wasserdampf kann dann in einen Behandlungsraum des Haushaltsgeräts, z.B. in einen Garraum eines Gargeräts, eingebracht werden.

Der Verdampfer kann ein Durchlauferhitzer oder ein Boiler sein. Bei einem Durchlauferhitzer wird typischerweise ein in einem Heizrohr stehendes Wasser durch eine das Heizrohr umgebende Heizung erhitzt, während in einem Boiler ein mit Wasser gefüllter Behälter durch eine meist in einem Boden des Behälters eingebrachte Heizplatte aufgeheizt wird. Ein Durchlauferhitzer weist den Vorteil auf, dass die Erwärmung des Wassers besonders schnell geschieht und eine Dampfregelung vergleichsweise schnell anspricht.

Der Verdampfer weist ein im Wesentlichen aufrecht stehendes Heizrohr auf, in welchem zu erhitzendes Wasser steht und welches durch eine es umgebende Heizung erhitzbar ist, wobei das Dampferzeugungssystem im Wesentlichen in einer senkrechten Ebene V-förmig bis U-förmig verläuft.

Es ist eine Weiterbildung, dass das Dampferzeugungssystem im Wesentlichen in einer senkrechten Ebene V-förmig bis U-förmig verläuft.

Es ist noch eine Ausgestaltung, dass der Verdampfer in einem Bereich eines von zwei Schenkeln des V-förmigen (aufweisend insbesondere zwei schräg stehende Schenkel) bis U-förmigen (zwei hochstehende Schenkel, welche durch einen Querabschnitt miteinander verbunden sind) Verlaufs angeordnet ist und die Wasserversorgung zumindest teilweise in einem Bereich eines anderen der Schenkel des V-förmigen bis U-förmigen Verlaufs angeordnet ist. So kann der Verdampfer beispielsweise im Bereich eines linken Schenkels des "U" oder des "V" angeordnet sein, während die Wasserversorgung im Bereich eines rechten Schenkels des "U" oder des "V" angeordnet ist.

Es ist auch eine Ausgestaltung, dass die Wasserversorgung ein Wasserreservoir und einen Wasserkanal zu dem Verdampfer umfasst. Der entsprechende Schenkel kann somit einen Wasserkanal von einem Wasserreservoir aufweisen.

Die Wasserdurchlasssteuereinrichtung, z.B. eine Pumpe oder ein Ventil, kann an beliebiger Stelle vor dem Verdampfer angeordnet sein, aus Platzgründen und zur einfachen Montage vorzugsweise in einem geodätisch unteren Bereich, insbesondere im Bereich einer Spitze des "V" oder des Querabschnitts des "U".

Die Wand kann insbesondere eine Seitenwand oder eine Rückwand des Haushaltsgeräts sein. Dabei kann ein Verlauf an der Rückwand bevorzugt sein, da häufig ein zur Verfügung stehender Bauraum an der Rückwand tiefer ist als an einer Seite (linken Seite oder rechten Seite) des Haushaltsgeräts. Die Rückwand kann grundsätzlich eine beliebige Rückwand sein, insbesondere eine Rückwand des Behandlungsraums (z.B. Garraums eines Gargeräts), eine Zwischenrückwand oder eine äußeren Rückwand des Haushaltsgeräts sein.

Es ist davon eine bevorzugte Ausgestaltung, dass das Dampferzeugungssystem zumindest teilweise an einer Zwischenrückwand des Haushaltsgeräts verläuft. Die Zwischenrückwand des Haushaltsgeräts ist nach Innen von einer Rückwand des Behandlungsraums, z.B. meiner Rückwand einer Ofenmuffel, durch eine Wärmeisolierung getrennt und nach Außen von einer äußeren Rückwand des Haushaltsgeräts überdeckt. Die Zwischenrückwand weist somit keine heißen Stellen auf und ist durch die äußere Rückwand von einer mechanischen Beanspruchung geschützt.

Es ist noch eine weitere Ausgestaltung, dass zumindest der Verdampfer an der Wand, insbesondere Zwischenrückwand, angeordnet ist. Dies weist den Vorteil auf, dass der Verdampfer einfach und präzise in Bezug auf seine vertikale Ausrichtung platzierbar und montierbar ist und zudem der Verdampfer keiner signifikanten thermischen Beeinflussung durch den Behandlungsraum, z.B. Garraum, unterliegt.

Es ist zudem eine Ausgestaltung, dass das Dampferzeugungssystem ferner mindestens einen Dampfeinlass für einen Einlass von durch den mindestens einen Verdampfer erzeugtem Dampf in den Behandlungsraum des Haushaltsgeräts aufweist oder damit verbunden ist und dass der Dampfeinlass an einem oberen Rand einer Wand, insbesondere Rückwand, des Behandlungsraums des Haushaltsgeräts oder an einer Decke des Behandlungsraums angeordnet ist. Durch diese Position des Dampfeinlasses kann der Behandlungsraum einfach mit dem Wasserdampf in einer ausreichend homogenen Konzentration ausgefüllt werden.

Es ist eine besondere Ausgestaltung, dass die Wasserversorgung ein Wasserreservoir aufweist, das auf einer anderen Seite des Haushaltsgeräts als der Dampfeinlass angeordnet ist. So kann eine lange Strecke des Dampferzeugungssystems zwischen diesen Endpunkten erzeugt werden, wodurch mindestens der Verdampfer und die Wasserdurchlasssteuereinrichtung ausreichend weit auseinander gezogen werden können, und gleichzeitig kann das Wasserreservoir ebenfalls einfach montiert werden. Dies kann insbesondere für den Fall vorteilhaft sein, dass ein Bauraum oberhalb des Behandlungsraums, welcher z.B. eine Steuereinrichtung, ein Gebläse usw. trägt, begrenzt ist. Ein Befüllungskanal zum Befüllen des Wasserreservoirs kann flexibel verlegt werden, z.B. an eine Oberseite oder Vorderseite des Haushaltsgeräts. Das Wasserreservoir kann sich für ein großes Volumen und zur Erlangung eines geodätisch hohen Wasserspiegels insbesondere bei einer Verwendung eines Ventils als der Wasserdurchlasssteuereinrichtung vertikal über mehr als die Hälfte der Zwischenrückwand erstrecken.

Insbesondere für den Fall, dass die Wasserdurchlasssteuereinrichtung ein Ventil ist, kann es eine bevorzugte Ausgestaltung sein, dass eine Fallhöhe des Wassers von dem Wasserreservoir zu dem Verdampfer bzw. ein Wasserdruck an dem Verdampfer erhöht werden. Dies ermöglicht z.B. eine schnell ansprechende Steuerung der Wasserzufuhr zu dem Verdampfer, und zwar auch durch das Ventil.

Es ist ferner eine Ausgestaltung, dass der mindestens eine Verdampfer und mindestens eine andere Einheit des Dampferzeugungssystems (Ventil, oder Pumpe, Wasserreservoir, Füllstandsdetektionseinheit, Wasserleitung(en) (Schläuche, Röhren) usw.) an einem gemeinsamen Montageträger angebracht sind und der Montageträger an der Wand, insbesondere Rückwand, insbesondere Zwischenrückwand, befestigt ist. Durch den Montageträger können die daran befestigten Komponenten präzise befestigt und ausgerichtet werden. Zudem ist eine Montage dieser Komponenten separat von dem Haushaltsgerät möglich, was eine besonders einfache und präzise Anbringung an dem Montageträger, auch unter Verwendung von maschinellen Hilfsmitteln, ermöglicht. Ein weiterer Vorteil liegt darin, dass die an dem Montageträger befestigten Komponenten unabhängig von dem Haushaltsgerät getestet werden können und dann als getestete Einheit an das Haushaltsgerät montiert werden können.

Es ist eine besondere Ausgestaltung, dass zumindest der mindestens eine Verdampfer und zusätzlich mindestens die Wasserdurchlasssteuereinrichtung auf bzw. an dem gemeinsamen Montageträger angebracht sind (inklusive der sie verbindenden Wasserführungen). So können die beide aktiv betriebenen Funktionseinheiten des Dampferzeugungssystems zusammen montiert und getestet werden, was eine Funktionssicherheit erhöht.

Es ist noch eine Ausgestaltung, dass mindestens der mindestens eine Verdampfer und zusätzlich mindestens das Wasserreservoir auf dem gemeinsamen Montageträger angebracht sind (inklusive der sie verbindenden Wasserführungen) So kann eine ggf. aufwändigere separate Montage und Ausrichtung des Wasserreservoirs vermieden werden.

Es ist eine spezielle Ausgestaltung, dass mindestens der mindestens eine Verdampfer, die Wasserdurchlasssteuereinrichtung und das Wasserreservoir auf bzw. an dem gemeinsamen Montageträger angebracht sind (inklusive der sie verbindenden Wasserführungen). Dadurch diese wichtigen funktionalen Komponenten gemeinsam ausgerichtet und montiert werden.

Es ist außerdem eine Ausgestaltung, dass der Montageträger aus Kunststoff besteht, z.B. um Gewicht zu sparen.

Für einen effizienten und sicheren Betrieb des Verdampfers, insbesondere Durchlauferhitzers, sollte dessen Füllstand zumindest innerhalb eines vorbestimmten Bereichs gehalten werden. Dazu kann eine Füllstandsdetektionseinheit vorgesehen sein, welche zumindest ein Erreichen eines vorbestimmten Füllstands erkennen kann. Die Füllstandsdetektionseinheit kann für eine präzise Bestimmung des Füllstands in der Dampferzeugungseinheit nach dem Prinzip der kommunizierenden Röhren mit der der Dampferzeugungseinheit verbunden sein. Außerdem sollte für eine gute Dampfqualität sich zwischen dem Verdampfer und dem Garraum gebildetes Kondensat nicht in den Verdampfer zurückfließen, sondern in einen Kondensatrücklauf. Insbesondere kann der Kondensatrücklauf in die Füllstandsdetektionseinheit integriert. In anderen Worten dient die Füllstandsdetektionseinheit aus als der Kondensatrücklauf, in welchen das Kondensat zurückfließt. Der Kondensatrücklauf kann auch als ein Kondensatrücklaufbehälter oder als eine Kondensatauffangeinheit angesehen werden. Die funktionale Kombination der Füllstandsdetektionseinheit mit dem Kondensatrücklauf bewirkt eine besonders kompakte und preiswerte Bauform, da auf einen separaten Kondensatrücklauf verzichtet werden kann. Dabei wird eine Genauigkeit der Füllstandsbestimmung nicht oder nicht wesentlich beeinträchtigt. Es ist eine für eine besonders kompakte Bauweise bevorzugte Ausgestaltung, dass der Verdampfer schräg steht und die Füllstandsdetektionseinheit senkrecht steht.

Es ist noch eine Ausgestaltung, dass mindestens der mindestens eine Verdampfer und zusätzlich mindestens eine dedizierte Füllstandsdetektionseinheit auf dem gemeinsamen Montageträger angebracht sind (inklusive der sie verbindenden Wasserführungen) Dadurch kann eine präzise Ausrichtung dieser beiden Komponenten erleichtert oder sogar erst mit geringem Aufwand ermöglicht werden, was wiederum die Betriebssicherheit erhöht

Alternativ kann die Füllstandsdetektionseinheit in oder an dem Wasserreservoir untergebracht sein.

Es ist auch eine Ausgestaltung, dass die Füllstandsdetektionseinheit mindestens einen Schwimmer aufweist, welcher mindestens einen Reedkontakt oder Reedschalter bei Annäherung schaltet. Der Schwimmer weist dazu mindestens ein magnetisches oder elektrisch leitendes Volumen auf. Durch diese Ausgestaltung kann eine relativ einfache und aufwandsarme und dennoch sehr zuverlässige Möglichkeit geschaffen werden, die jeweiligen Füllstände zu überprüfen. Darüber hinaus kann eine relativ verschleißarme und auch fehlerarme Ausgestaltung gewährleistet werden.

Die Aufgabe wird auch gelöst durch ein Verfahren zum Montieren eines Dampferzeugungssystems für ein Haushaltsgerät, wobei das Dampferzeugungssystem mindestens einen Verdampfer in Form eines Durchlauferhitzers, der von einer Wasserversorgung mit Wasser versorgbar ist, mindestens eine Wasserdurchlasssteuereinrichtung, mittels welcher ein Wasserstrom von der Wasserversorgung zu dem Verdampfer steuerbar ist, aufweist. Der Verdampfer weist ein im Wesentlichen aufrecht stehendes Heizrohr auf, in welchem zu erhitzendes Wasser steht und welches durch eine ihn umgebende Heizung erhitzbar ist, wobei das Dampferzeugungssystem im Wesentlichen in einer senkrechten Ebene V-förmig bis U-förmig verläuft. Der mindestens eine Verdampfer und mindestens ein anderes Element des Dampferzeugungssystems werden auf einem gemeinsamen Montageträger angebracht, und der Montageträger wird folgend an einer Wand, insbesondere Zwischenrückwand, des Haushaltsgeräts befestigt. Dies ergibt die schon oben angesprochenen Vorteile.

Es ist eine Weiterbildung, dass der mindestens eine Verdampfer und die Wasserdurchlasssteuereinrichtung auf dem gemeinsamen Montageträger angebracht werden.

Es ist noch eine Weiterbildung, dass der mindestens eine Verdampfer und das Wasserreservoir auf dem gemeinsamen Montageträger angebracht werden.

Es ist eine weitere Weiterbildung, dass der Verdampfer und das mindestens eine anderen Element des Dampferzeugungssystems nach ihrer Montage auf dem gemeinsamen Montageträger und vor ihrer Befestigung an der Wand des Haushaltsgeräts getestet werden.

Es ist noch eine weitere Weiterbildung, dass der Montageträger an die Wand geschraubt und/oder mit der Rückwand verrastet wird, wodurch eine sichere und wenig aufwändige Montage ermöglicht wird.

Das Dampferzeugungssystem kann auch mindestens einen Dampfeinlass für einen Einlass von durch den mindestens einen Verdampfer erzeugtem Dampf in einen Behandlungsraum des Haushaltsgeräts aufweisen.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.1: zeigt in Seitenansicht eine Dampferzeugungseinheit für ein Haushaltsgerät gemäß einer ersten Ausführungsform; und
- Fig.2: zeigt in Frontalansicht eine Rückwand eines Haushaltsgeräts mit der daran angebrachten Dampferzeugungseinheit gemäß der ersten Ausführungsform;
- Fig.3: zeigt in einer Ansicht schräg von der Seite eine Dampferzeugungseinheit für ein Haushaltsgerät gemäß einer zweiten Ausführungsform;
- Fig.4: skizziert in Frontalansicht ein Dampferzeugungssystem gemäß einer zweiten Ausführungsform; und
- Fig.5: skizziert in Frontalansicht das an einer Rückseite der Zwischenrückwand eines Haushaltsgeräts angebrachte Dampferzeugungssystem gemäß der zweiten Ausführungsform.

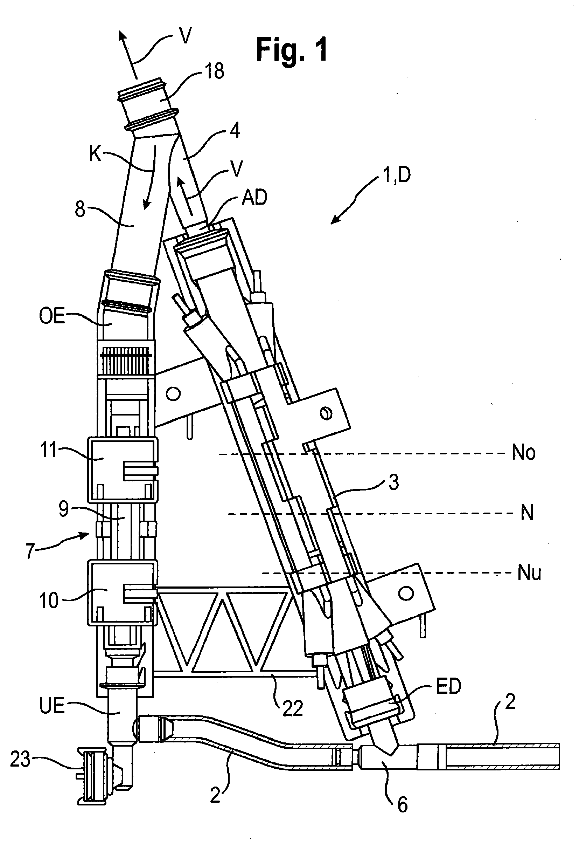

Fig.1 zeigt eine Dampferzeugungseinheit 1 für ein Haushaltsgerät in Form eines Dampfgargeräts D. Die Dampferzeugungseinheit 1 weist einen Zuflusskanal 2 auf, welcher zu einer Eingangsseite ED eines Verdampfers in Form eines Durchlauferhitzers 3 führt. An seiner Ausgangsseite AD ist der Durchlauferhitzer 3 mit einem Dampfauslasskanal 4 verbunden. Der Dampfauslasskanal 4 erweitert sich ab einer vorbestimmten Strecke hinter dem Durchlauferhitzer 3 (dampfabwärts) zu einem Dampfkanal 18. Durch den Zuflusskanal 2 in den Durchlauferhitzer 3 gelangendes Wasser wird in dem Durchlauferhitzer 3 unter Bildung von Wasserdampf V erhitzt und durch den Dampfauslasskanal 4 ausgegeben. Die Strömungsrichtung des Wasserdampfs V ist durch den zugehörigen Pfeil angedeutet. Das Wasser kann mittels einer Pumpe (o.Abb.) durch den Zuflusskanal 2 gefördert werden. Alternativ kann, falls ein Füllstand (oder Wasserstand oder Pegel) in einem Wasserreservoir oberhalb eines gewünschten Füllstands N in dem Durchlauferhitzer 3 liegt, das Wasser durch ein wahlweises Öffnen und Schließen eines Ventils, welches einen Strömungsquerschnitt zu dem Wasserreservoir steuert, herangeführt werden.

Vor der Eingangsseite ED des Durchlauferhitzers 3 befindet sich in dem Zuflusskanal 2 ein Verteilerstück 6, das an ein unteres Ende UE einer Füllstandsdetektionseinheit 7 hydraulisch angeschlossen ist. Ein oberes Ende OE der Füllstandsdetektionseinheit 7 ist über einen Kondensatrücklaufkanal 8 fluidisch mit dem Dampfkanal 18 verbunden, genauer gesagt öffnet sich der Kondensatrücklaufkanal 8 in eine Unterseite des Dampfkanals 18.

Der Durchlauferhitzer 3 und die Füllstandsdetektionseinheit 7 sind somit nach dem Prinzip kommunizierender Röhren fluidisch parallel geschaltet und bilden hydraulisch eine Einheit. Der (geodätische) Füllstand N in dem Durchlauferhitzer 3 entspricht somit im Wesentlichen dem Füllstand in der Füllstandsdetektionseinheit 7. Während der Durchlauferhitzer 3 für eine kompakte Bauweise leicht schräg in Richtung der Füllstandsdetektionseinheit 7 ausgerichtet ist, steht die Füllstandsdetektionseinheit 7 senkrecht.

Die Füllstandsdetektionseinheit 7 weist ein Gehäuse 9 mit einem darin befindlichen Schwimmer (o.Abb.) auf, der auf dem Wasser schwimmt. Die Position des Schwimmers ist somit auch ein Maß für das Füllstandsniveau in dem Durchlauferhitzer 3. Der Schwimmer ist mit mindestens einem magnetischen Element ausgestattet. Die Füllstandsdetektionseinheit 7 weist ferner hier zwei an dem Gehäuse 9 zueinander beabstandet angeordnete Reedkontakte oder Reedschalter auf, nämlich einen unteren Reedkontakt 10 und einen oberen Reedkontakt 11. Die Reedkontakte 10 und 11 reagieren auf eine Annäherung des Schwimmers.

Während eines Betriebs sollte der Füllstand N in dem Durchlauferhitzer 3 zwischen einem unteren Füllstandsniveau Nu und einem oberen Füllstandsniveau No (optimaler Füllstandsbereich) gehalten werden, um eine hochgradig gleichmäßige Dampferzeugung und gute Dampfqualität (weitgehende Freiheit von Wassertröpfchen) zu gewährleisten. Das Einhalten des optimalen Füllstandsbereichs gewährleistet auch, dass der Durchlauferhitzer 3 einfach innerhalb eines bestimmten Temperaturbereiches bzw. auf eine vorbestimmte Temperatur geregelt werden kann. Bei einem Überschreiten des oberen Füllstandsniveaus No und/oder bei einem Unterschreiten des unteren Füllstandsniveaus Nu kann der Durchlauferhitzer 3 zudem beschädigt werden, z.B. durch ein Trockengehen bei dem Unterschreiten des unteren Füllstandsniveaus Nu. Das Einhalten des optimalen Füllstandsbereichs durch eine entsprechende Regelung der Füllstandshöhe als einer Regelgröße kann durch eine Erkennung der Füllstandshöhe mittels der Füllstandsdetektionseinheit 7 erreicht werden.

Das Einhalten des optimalen Füllstandsbereichs kann auf mehrere Arten geschehen:
In einer Ausgestaltung ist die Füllstandsdetektionseinheit 7 wie gezeigt mit den beiden Reedkontakten 10 und 11 ausgestattet. Die Reedkontakte 10 und 11 werden über den magnetischen Schwimmer, der sich entsprechend dem Füllstand innerhalb der Füllstandsdetektionseinheit 7 bewegt, geschaltet. Steigt der Füllstand in der Füllstandsdetektionseinheit 7 bis zu dem oberen Füllstandsniveau No, schaltet der obere Reedkontakt 11, und eine Wasserzufuhr über den Zuflusskanal 2 wird unterbrochen, z.B. durch ein Stoppen der Pumpe oder ein Schließen des Ventils. Dadurch wird eine Befüllung des Durchlauferhitzers 3 gestoppt. Sinkt andererseits der Füllstand in der Füllstandsdetektionseinheit 7 durch das Verdampfen bis auf das untere Füllstandsniveau Nu ab, schaltet der untere Reedkontakt 10, und eine Wasserzufuhr über den Zuflusskanal 2 wird wieder aufgenommen bzw. aktiviert.

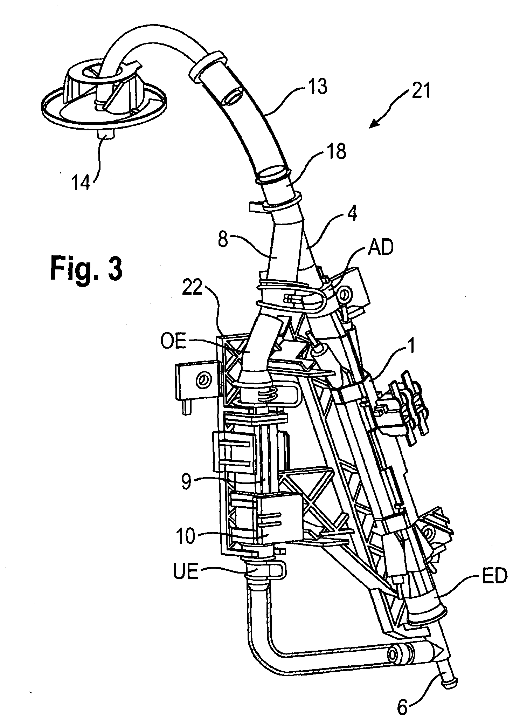

In einer alternativen Ausgestaltung ist es möglich, auch nur eine einzige Position des Schwimmers bzgl. nur ein Schalten eines der Reedkontakte 10 und 11 zu detektieren und den zweiten Schaltpunkt der Pumpe oder des Ventils über empirisch ermittelte Werte abzuleiten. So kann in einer ersten alternativen Ausgestaltung der Füllstand auf das obere Füllstandsniveau No steigen, worauf ein (oberer) Reedkontakt 11 schaltet und so die Wasserzufuhr bzw. die Befüllung gestoppt wird. Das Fallen des Füllstandes z.B. bis auf das untere Füllstandsniveau Nu (oder darüber) ergibt sich aus der verdampften Wassermenge. Die verdampfte Wassermenge wiederum lässt sich aus der Leistung des Durchlauferhitzers 3 (hier ca. 1100 Watt) und der eingeschalteten Zeitdauer des Durchlauferhitzers 3 abschätzen. Der Schaltpunkt für das Wiederbefüllen erfolgt folglich nicht durch ein Schalten eines (unteren) Reedkontakts 10, sondern nach einer gewissen Zeitdauer bei bekannter Verdampfungsleistung und folgend der Dampfmenge des Durchlauferhitzers 3. Eine zweite alternative Ausgestaltung ist in Fig.3 gezeigt.

Für eine Entleerung weist die Dampferzeugungseinheit 1 ein Ablaufventil 23 auf.

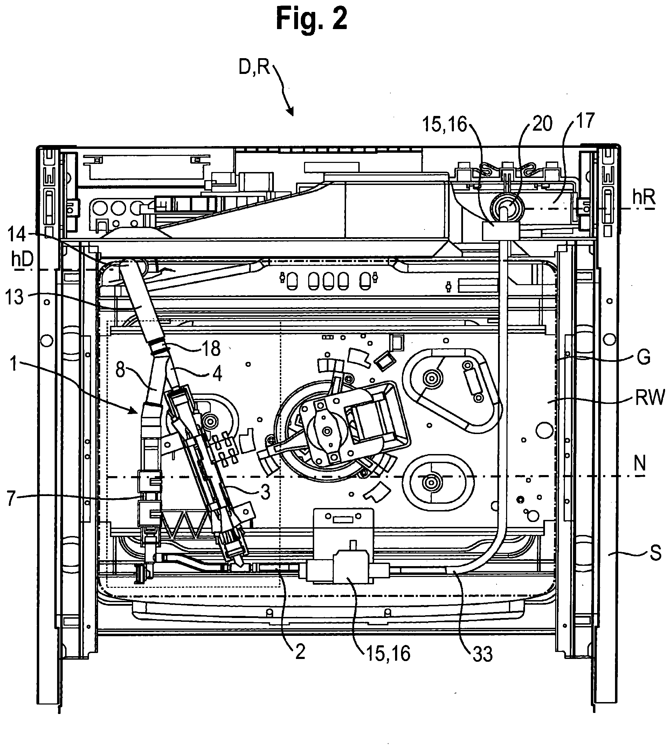

Fig.2 zeigt in Frontalansicht eine Rückseite R des Dampfgargeräts D bei abgenommener äußerer Rückwand (o.Abb) mit Blick unter anderem auf eine Zwischenrückwand RW mit der daran angebrachten Dampferzeugungseinheit 1. Die Dampferzeugungseinheit 1 ist ausgangsseitig bzw. dampfseitig durch einen Verbindungsschlauch 13 mit einem in einen Garraum G führenden Dampfeinlass 14 verbunden. Die Kontur der Zwischenrückwand RW des Dampfgargeräts D auf Höhe des Garraums G bzw. hinter dem Garraum G ist hier gestrichpunktet angedeutet. Der Dampfeinlass 14 kann mit einer Düse ausgerüstet sein. Die Dampferzeugungseinheit 1 ist eingangsseitig über den Zuflusskanal 2 mit einer Pumpe 15 oder Ventil 16 verbunden, welche bzw. welches wiederum über einen Verbindungsschlauch 33 mit einem Wasserreservoir 17 verbunden ist.

Ein Auslass 20 des Wasserreservoirs 17 liegt auf einer Höhe hR geodätisch höher als die Pumpe 15 oder das Ventil 16, die Dampferzeugungseinheit 1 und der Dampfeinlass 14. Die Dampferzeugungseinheit 1 und damit ein mittlerer Füllstand N der Dampferzeugungseinheit 1 liegen demgegenüber tiefer, während der Dampfeinlass 14 auf einer geodätischen Höhe hD liegt, welche tiefer liegt als die Höhe hR, aber höher als die Dampferzeugungseinheit 1 und deren Füllstand N.

Das Wasserreservoir 17 ist insbesondere oberhalb des Garraums G angeordnet, so dass es einer nur geringen thermischen Belastung ausgesetzt ist. Das Wasserreservoir 17 ist ferner benachbart zu oder in der Nähe einer Seitenwand S des Dampfgargeräts D angeordnet, z.B. einem rechtsseitigen Bereich (wie hier bei rückwärtiger Betrachtung gezeigt) oder einem linksseitigen Bereich. Von dem Wasserreservoir 17 führt der Verbindungsschlauch 33 zunächst senkrecht nach unten bis zu einem unteren Randbereich der Zwischenrückwand RW und biegt dann waagerecht, entlang des unteren Rands der Zwischenrückwand RW, zu der anderen Seite (hier der linken Seite) ab. Auf der anderen Seite befindet sich an der Zwischenrückwand RW die Dampferzeugungseinheit 1, welche sich wieder im Wesentlichen nach oben in Richtung des Dampfeinlasses 14 erstreckt. Der Dampfeinlass 14 befindet sich an einem oberen Rand der Rückwand (o.Abb.) des Garraums G. Alternativ kann der Dampfeinlass 14 sich in einer Decke des Garraums G befinden.

Insgesamt weist das von dem Wasserreservoir 17 bis zu dem Dampfeinlass 14 reichende Dampferzeugungssystem im Wesentlichen eine U-Form auf, wobei der Verbindungsschlauch 33 den rechten Schenkel des "U" darstellt, der Verdampfer 3 den linken Schenkel des "U" darstellt und die Pumpe 15 an einem Boden oder Querabschnitt des "U" angeordnet ist. Dadurch wird ein zentraler Bereich der Zwischenrückwand RW für eine Montage anderer Elemente des Dampfgargeräts freigehalten, und die einzelnen Komponenten 2, 3, 15, 17, 32 können bequem und ohne gegenseitige Behinderung montiert werden.

Die U-Form lässt in der Mitte der Zwischenrückwand RW Platz für eine Montage weiterer Bauteile, z.B. eines Lüfters. Die Höhen des Wasserreservoirs 17, der Dampferzeugungseinheit 1 und des Dampfeinlasses 14 zeigen eine Abfolge 'hoch-tief-mittel'. Alternativ kann das Dampferzeugungssystem im Wesentlichen eine V-Form aufweisen, z.B. mit dem Verdampfer 3 in oder an dem linken Schenkel des "V" und dem Verbindungsschlauch 33 in oder an dem rechten Schenkel des "V". Eine alternative Position der Pumpe 15 oder des Ventils 16 befindet sich direkt an dem Wasserreservoir 17.

In einem Bereich zwischen dem Durchlauferhitzer 3 und dem Dampfeinlass 14 können sich aus Kondensat Wassertröpfchen bilden. Um zu vermeiden, dass diese Wassertröpfchen mit dem Wasserdampf V in Richtung des Dampfeinlasses 14 getrieben werden, schließt sich an den vergleichsweise kurzen Dampfauslasskanal 4 der Dampfkanal 18 mit seinem größeren Strömungsquerschnitt an, welcher wiederum an den Verbindungsschlauch 13 angeschlossen ist. Der Verbindungsschlauch 13 weist ebenfalls einen vergleichsweise großen Strömungsquerschnitt auf. Aufgrund des großen Strömungsquerschnitts des Dampfkanals 18 und des Verbindungsschlauchs 13 strömt der Wasserdampf V darin mit einer relativ geringen Geschwindigkeit, so dass die Wassertröpfchen aus Kondensat K nicht in Richtung des Dampfeinlasses 14 mitgerissen werden. Vielmehr laufen die Wassertröpfchen aufgrund der Schwerkraft in dem Verbindungsschlauch 13 und in dem Dampfkanal 18 gegen die Strömungsrichtung des Wasserdampfs V zurück und weiter durch den Kondensatrücklaufkanal 8 in die Füllstandsdetektionseinheit 7. Die Füllstandsdetektionseinheit 7 dient somit gleichzeitig als ein Kondensatrücklauf oder Kondensatauffangeinheit, wodurch eine besonders kompakte Bauform ermöglicht wird.

Durch den vergleichsweise kleinen Strömungsquerschnitt des Dampfauslasskanals 4 wird in dessen Bereich eine hohe Strömungsgeschwindigkeit des Wasserdampfs V erreicht, was verhindert, dass kondensierte Wassertröpfchen zurück in den Durchlauferhitzer 3 gelangen. Dadurch wird verhindert, dass sich der aus dem Durchlauferhitzer 3 austretende Dampf V mit den Wassertröpfchen, die dann mitgerissen werden, vermischt und es so zu einer verschlechterten Dampfqualität kommt.

Fig.3 zeigt in einer Ansicht schräg von der Seite eine Dampferzeugungseinheit 21 für ein Haushaltsgerät gemäß einer zweiten Ausführungsform. Im Gegensatz zu der Dampferzeugungseinheit 1 gemäß der ersten Ausführungsform weist die Dampferzeugungseinheit 21 nun nur noch einen Reedkontakt 10 auf. Dabei schaltet der Reedkontakt 10 bei einem Erreichen des unteren Füllstandsniveaus Nu. Die Befüllung z.B. bis auf das obere Füllstandsniveau No (oder darunter) geschieht innerhalb eines bestimmten Zeitintervalls bzw. einer bestimmten Aktivierungszeitdauer der Pumpe oder des Magnetventils bzw. allgemein durch ein zeitlich begrenztes Erzeugen eines Volumenflusses durch den Zuflusskanal 2.

Der Verbindungsschlauch 13 ist eingangsseitig mit dem Dampfkanal 18 verbunden und ausgangsseitig mit dem Dampfeinlass 14, welcher in Form einer Düse ausgestaltet ist.

Der sich direkt an das Auslassende oder die Ausgangsseite AD des Durchlauferhitzers 3 anschließende Dampfauslasskanal 4 weist einen Durchmesser von ca. 6 mm bis 8 mm auf, insbesondere von ca. 6 mm. Dieser vergleichsweise geringe Strömungsquerschnitt sorgt für eine hohe Strömungsgeschwindigkeit des Wasserdampfs V. Dies wiederum verhindert ein Rückfließen des Kondensats in den Durchlauferhitzer 3, da eventuell vorhandene Wassertropfen durch den Wasserdampf V "weggeblasen" werden.

Der Dampfkanal 18 und der Verbindungsschlauch 13 weisen beide eine Erweiterung des Strömungsquerschnittes im Vergleich zu dem Dampfauslasskanal 4 auf. Dadurch sinkt die Strömungsgeschwindigkeit des Wasserdampfs V, so dass sich nun Kondensat bzw. Wassertropfen absetzen können, welche mit der Schwerkraft zurücklaufen. Es wird bevorzugt, dass sich ein an den geringen Strömungsquerschnitt direkt hinter dem Durchlauferhitzer 3 anschließender erweiterter Strömungsquerschnitt (hier des Dampfkanals 18 und des Verbindungsschlauchs 13) durch einen Durchmesser von mindestens 10 mm realisiert wird. Insbesondere ist ein Durchmesser zwischen 15 mm und 20 mm bevorzugt.

An dem Dampfeinlass 14 zum Garraum G findet wieder eine Reduktion des Strömungsquerschnitts statt, wodurch Kondensat und Wassertropfen zurückgehalten werden und nicht in den Garraum G eindringen. Bevorzugt wird ein Durchmesser des Dampfauslasses auf 8 mm oder weniger, insbesondere auf ca. 6 mm.

Der Kondensatrücklaufkanal 8 weist einen Durchmesser von mindestens 8 mm, insbesondere mindestens 10 mm auf, damit das Kondensat ungehindert und im Wesentlichen vollständig in die Füllstandsdetektionseinheit 7 zurückfließen kann.

Sowohl bei der Dampferzeugungseinheit 1 gemäß der ersten Ausführungsform als auch bei der Dampferzeugungseinheit 21 gemäß der zweiten Ausführungsform zeichnen sich durch eine sehr gute Dampfqualität aus, bei welcher der erzeugte bzw. ausgelassene Dampf keine oder eine nur geringe Menge an Wassertropfen aufweist. Zudem ist ein gleichmäßiger Betrieb der Dampferzeugung möglich, da der Füllstand gleichmäßig (im Wesentlichen konstant oder innerhalb eines vorbestimmten Bereichs) eingehalten werden kann. Aufgrund des gleichmäßigen Füllstands ist auch eine Temperaturregelung des Durchlauferhitzers 3 leicht möglich. Ferner wird die Befüllung des Durchlauferhitzers 3 auf eine einfache und robuste Weise ermöglicht. Die Befüllung des Durchlauferhitzers 3 ist regelbar. Die Gefahr, dass der Durchlauferhitzers 3 überläuft oder mit zu wenig Wasser beschickt wird (trockengeht), wird ausgeschlossen.

Unter dem Dampfgargerät D kann insbesondere ein dedizierter Dampfgarer oder eine Ofen/Dampfgar-Kombination, z.B. ein Backofen mit einer Dampfgarfunktion, verstanden werden.

In beiden Ausführungsbeispielen sind der Durchlauferhitzer 3 und die Füllstandsdetektionseinheit 7 an einem jeweiligen gemeinsamen Montageträger 22 befestigt, um eine genaue und beständige Ausrichtung zueinander zu erreichen. Der Montageträger 22 ist für eine Gewichtseinsparung als eine Strebenkonstruktion aus Kunststoff ausgebildet.

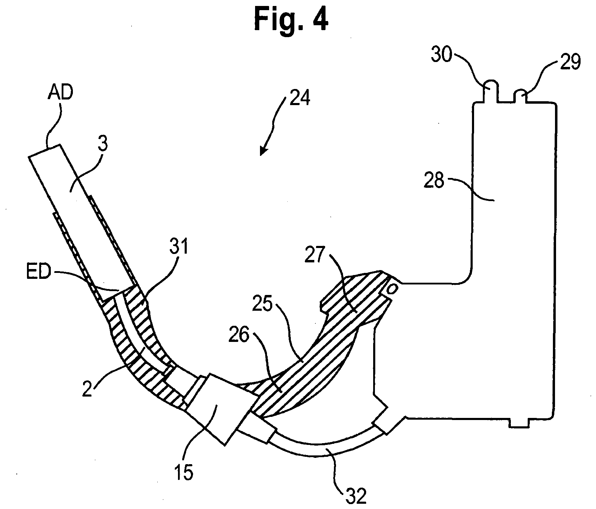

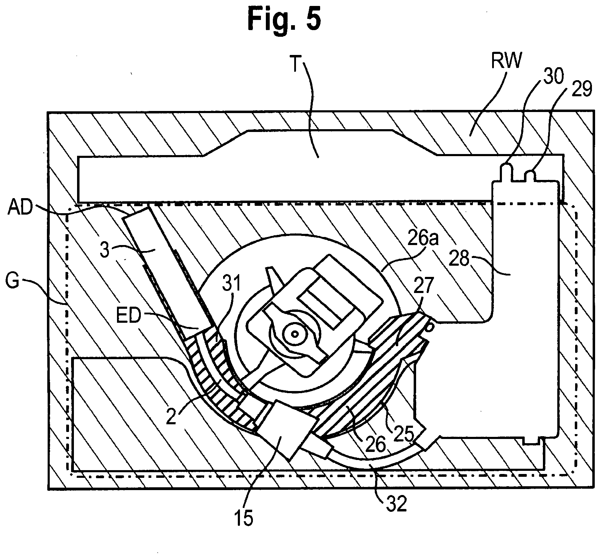

Fig.4 skizziert in Frontalansicht ein Dampferzeugungssystem 24 gemäß einer zweiten Ausführungsform; und Fig.5 skizziert das an einer Rückseite der Zwischenrückwand RW angebrachte Dampferzeugungssystem 24. Die in Fig.5 gezeigte Zwischenrückwand RW deckt von hinten einen gestrichelt angedeuteten Garraum G ab und weist darüber einen Ausnehmung T zum Zugang zu einem oberhalb des Garraum G befindlichen Bereich auf, welcher z.B. ein Steuergerät (Elektronik) und eine Lüftung aufnehmen kann. Bezug nehmend auf beide Figuren weist das Dampferzeugungssystem 24 einen Montageträger (Montagewinkel) 25 aus Kunststoff auf, welcher in einem mittleren Bereich 26 ringförmig ausgestaltet ist, um in eine entsprechende ringförmige Vertiefung 26a der Zwischenrückwand RW passend eingesetzt zu werden.

An einem rechten Ende 27 des Montageträgers 25 ist das Wasserreservoir 28 angebracht, z.B. verschraubt, welches somit auch an der Zwischenrückwand RW angeordnet ist. Das Wasserreservoir 28 weist eine Entlüftungsöffnung 29 und einen Einlassstutzen 30 zur Befestigung eines nach vorne verlegten Wassereinlassschlauchs (o.Abb.) auf, über welchen das Wasserreservoir 28 befüllt werden kann. Das Wasserreservoir 28 erstreckt sich über die Hälfte der Höhe der Zwischenrückwand RW.

An einem linken Ende 31 des Montageträgers 25 ist der Verdampfer 3 schräg angebracht und zwar ähnlich zu dem ersten Ausführungsbeispiel. Jedoch ist dieser nun nicht mit einer Füllstandsdetektionseinheit verbunden. Der Füllstand wird vielmehr mittels einer Füllstandsdetektionseinrichtung (o.Abb.) innerhalb des Wasserreservoirs 28 abgefühlt, was durch die große Höhe des Wasserreservoirs 28 erleichtert wird. Wie zuvor tritt an dem Auslassende AD des Verdampfers 3 Wasserdampf aus, welcher zu dem nicht gezeigten Dampfeinlass weitergeführt wird.

An dem mittleren Bereich 26 des Montageträgers 25 ist die Pumpe 15 befestigt, welche über entsprechende Wasserschläuche 2, 32 mit dem Verdampfer 3 bzw. dem Wasserreservoir 28 verbunden ist und Wasser aus dem Wasserreservoir 28 zu dem Verdampfer pumpen kann. Das in Fig.4 gezeigte Dampferzeugungssystem 24 kann separat von dem restlichen Dampfgargerät D zusammengesetzt und bei Bedarf auch getestet werden. Dies ergibt ein einfach und präzise montiertes Dampferzeugungssystem 24, welches zudem eine erhöhte Ausfallsicherheit bietet. Das Dampferzeugungssystem 24 kann im Anschluss an die Montage und ggf. den Funktionstest als Ganzes an der Zwischenrückwand RW befestigt werden, z.B. durch Verrasten und/oder Verschrauben, und dann hydraulisch und elektrisch angeschlossen werden.

Das Dampferzeugungssystem 24 weist in der gezeigten Frontalansicht im Wesentlichen eine U-Form auf, bei der das Wasserreservoir 28 den rechten Schenkel des "U" darstellt, der Verdampfer 3 mit dem Zuflusskanal 2 den linken Schenkel des "U" darstellt und die Pumpe 15 in etwa an einem Boden oder Querabschnitt des "U" angeordnet ist. Dadurch wird ein zentraler Bereich der Zwischenrückwand RW für eine Montage anderer Elemente des Dampfgargeräts freigehalten, und die einzelnen Komponenten 2, 3, 15, 17, 32 können bequem und ohne gegenseitige Behinderung montiert werden.

Selbstverständlich ist die vorliegende Erfindung nicht auf das gezeigte Ausführungsbeispiel beschränkt, sondern ausschließlich durch die Gesamtheit der Merkmale eines jeden der anhängenden unabhängigen Ansprüche definiert.

### Bezugszeichenliste

- 1: Dampferzeugungseinheit
- 2: Zuflusskanal
- 3: Durchlauferhitzer
- 4: Dampfauslasskanal
- 6: Verteilerstück
- 7: Füllstandsdetektionseinheit
- 8: Kondensatrücklaufkanal
- 9: Gehäuse
- 10: unterer Reedkontakt
- 11: oberer Reedkontakt
- 13: Verbindungsschlauch
- 14: Dampfeinlass
- 15: Pumpe
- 16: Ventil
- 17: Wasserreservoir
- 18: Dampfkanal
- 20: Auslass des Wasserreservoirs
- 21: Dampferzeugungseinheit
- 22: Montageträger
- 23: Ablaufventil
- 24: Dampferzeugungssystem
- 25: Montageträger
- 26: mittlerer Bereich des Montageträgers
- 26a: Vertiefung
- 27: rechtes Ende des Montageträgers
- 28: Wasserreservoir
- 29: Entlüftungsöffnung
- 30: Einlassstutzen
- 31: linkes Ende des Montageträgers
- 32: Wasserschlauch
- 33: Verbindungsschlauch
- AD: Ausgangsseite
- D: Dampfgargerät
- ED: Eingangsseite
- G: Garraum
- hR: Höhe des Wasserreservoirs
- hD: Höhe des Dampfeinlasses
- K: Kondensat
- N: Füllstand in dem Durchlauferhitzer
- No: oberes Füllstandsniveau
- Nu: unteres Füllstandsniveau
- OE: oberes Ende
- R: Rückwand des Dampfgargeräts
- RW: Zwischenrückwand
- S: Seitenwand des Dampfgargeräts
- UE: unteres Ende
- V: Wasserdampf

## Patentansprüche

1. Haushaltsgerät (D) mit einem Dampferzeugungssystem (24), mindestens aufweisend
- eine Wasserversorgung (17, 23; 28),
- mindestens einen Verdampfer (3) in Form eines Durchlauferhitzers, der von der Wasserversorgung (17; 28) mit Flüssigkeit versorgbar ist, und
- mindestens eine Wasserdurchlasssteuereinrichtung (15), mittels welcher ein Wasserstrom von der Wasserversorgung (17; 28) zu dem Verdampfer (3) steuerbar ist,
- das Dampferzeugungssystem (24) zumindest teilweise an einer Wand (RW) des Haushaltsgeräts (D) verläuft und dort einen im Wesentlichen aufrecht stehenden V-förmigen bis U-förmigen Verlauf aufweist und
- die Wasserversorgung ein Wasserreservoir (17) aufweist, wobei der mindestens eine Verdampfer (3) tiefer angeordnet ist als das Wasserreservoir (17) und der Dampfeinlass (14) des Haushaltsgerätes, wobei das Wasserreservoir (17) oberhalb des Behandlungsraums (G) des Haushaltsgerätes angeordnet ist,
**dadurch gekennzeichnet, dass**
- der Verdampfer (3) ein im Wesentlichen aufrecht stehendes Heizrohr aufweist, in welchem zu erhitzendes Wasser steht und welches durch eine es umgebende Heizung erhitzbar ist.

2. Haushaltsgerät (D) nach einem der vorhergehenden Ansprüche, **dadurch gekennzeichnet, dass** der Verdampfer (3) in einem Bereich eines von zwei Schenkeln des V-förmigen bis U-förmigen Verlaufs angeordnet ist und die Wasserversorgung (17, 23; 28) zumindest teilweise in einem Bereich eines anderen der Schenkel des V-förmigen bis U-förmigen Verlaufs angeordnet ist.

3. Haushaltsgerät (D) nach Anspruch 2, **dadurch gekennzeichnet, dass** die Wasserversorgung (17, 23; 28) einen Wasserkanal zu dem Verdampfer (3) umfasst.

4. Haushaltsgerät (D) nach einem der vorhergehenden Ansprüche, **dadurch gekennzeichnet, dass** die Wand (RW) eine Zwischenrückwand ist.

5. Haushaltsgerät (D) nach Anspruch 4, **dadurch gekennzeichnet, dass** zumindest der Verdampfer (3) an der Wand (RW) angeordnet ist.

6. Haushaltsgerät (D) nach einem der vorhergehenden Ansprüche, **dadurch gekennzeichnet, dass** das Dampferzeugungssystem (24) ferner mindestens einen Dampfeinlass (14) für einen Einlass von durch den mindestens einen Verdampfer (3) erzeugtem Dampf (V) in einen Behandlungsraum (G) des Haushaltsgeräts (D) aufweist und dass der Dampfeinlass (14) an einem oberen Rand einer Rückwand eines Behandlungsraums (G) des Haushaltsgeräts (D) oder an einer Decke des Behandlungsraums (G) angeordnet ist.

7. Haushaltsgerät (D) nach Anspruch 6, **dadurch gekennzeichnet, dass** die Wasserversorgung ein Wasserreservoir (17; 28) aufweist, das auf einer anderen Seite des Haushaltsgeräts (D) als der Dampfeinlass (14) angeordnet ist.

8. Haushaltsgerät (D) nach einem der vorhergehenden Ansprüche, **dadurch gekennzeichnet, dass** der mindestens eine Verdampfer (3) und mindestens eine andere Einheit (15; 28) des Dampferzeugungssystems (21) an einem gemeinsamen Montageträger (22; 25) angebracht sind und der Montageträger (22; 25) an der Wand (RW), insbesondere Zwischenrückwand, befestigt ist.

9. Haushaltsgerät (D) nach Anspruch 8, **dadurch gekennzeichnet, dass** mindestens der mindestens eine Verdampfer (3) und zusätzlich mindestens die Wasserdurchlasssteuereinrichtung (15) an dem gemeinsamen Montageträger angebracht sind.

10. Haushaltsgerät (D) nach einem der Ansprüche 8 oder 9, **dadurch gekennzeichnet, dass** mindestens der mindestens eine Verdampfer (3) und zusätzlich mindestens das Wasserreservoir (28) an dem gemeinsamen Montageträger (25) angebracht sind.

11. Verfahren zum Montieren eines Dampferzeugungssystems (24) für ein Haushaltsgerät (D), wobei das Dampferzeugungssystem (24)
- mindestens einen Verdampfer (3) in Form eines Durchlauferhitzers, der von einer Wasserversorgung (17; 28) mit Wasser versorgbar ist und mindestens eine Wasserdurchlasssteuereinrichtung (15), mittels welcher ein Wasserstrom von der Wasserversorgung (17; 28) zu dem Verdampfer (3) steuerbar ist, aufweist,
**dadurch gekennzeichnet, dass**
- der Verdampfer (3) ein im Wesentlichen aufrecht stehendes Heizrohr aufweist, in welchem zu erhitzendes Wasser steht und welches durch eine es umgebende Heizung erhitzbar ist und
- der mindestens eine Verdampfer (3) und mindestens ein anderes Element (7; 15; 28) des Dampferzeugungssystems (24) an einem gemeinsamen Montageträger (22; 25) angebracht werden und der Montageträger (22; 25) folgend an einer Wand (RW) des Haushaltsgeräts (D) befestigt wird.

12. Verfahren nach Anspruch 11, **dadurch gekennzeichnet, dass** der Verdampfer (3) und das mindestens eine anderen Element (7; 15; 28) des Dampferzeugungssystems (24) nach ihrer Montage auf dem gemeinsamen Montageträger (22; 25) und vor ihrer Befestigung an der Wand (RW) des Haushaltsgeräts (D) getestet werden.

13. Verfahren nach einem der Ansprüche 11 bis 12, **dadurch gekennzeichnet, dass** der Montageträger (22; 25) an die Wand (RW) geschraubt und/oder mit der Wand (RW) verrastet wird.

## Claims

1. Household appliance (D) with a steam generation system (24), at least having
- a water supply (17, 23; 28),
- at least one evaporator (3) in the form of a flow-through water heater which can be supplied with fluid by the water supply (17; 28), and
- at least one water throughput control facility (15), by means of which a water flow from the water supply (17; 28) to the evaporator (3) can be controlled,
- the steam generation system (24) runs at least partially on a wall (RW) of the domestic appliance (D) and has a substantially upright V-shaped to U-shaped profile there and
- the water supply has a water reservoir (17), wherein the at least one evaporator (3) is arranged lower down than the water reservoir (17) and the steam inlet (14) of the domestic appliance, wherein the water reservoir (17) is arranged above the treatment space (G) of the domestic appliance,
**characterised in that**
- the evaporator (3) has a substantially upright heating pipe, in which water to be heated is present, and which can be heated by a heater surrounding the same.

2. Household appliance (D) according to one of the preceding claims, **characterised in that** the evaporator (3) is arranged in a region of one of two limbs of the V-shaped to U-shaped profile and the water supply (17, 23; 28) is arranged at least partially in a region of another of the limbs of the V-shaped to U-shaped profile.

3. Household appliance (D) according to claim 2, **characterised in that** the water supply (17, 23; 28) comprises a water duct to the evaporator (3).

4. Household appliance (D) according to one of the preceding claims, **characterised in that** the wall (RW) is an intermediate rear wall.

5. Household appliance (D) according to claim 4, **characterised in that** at least the evaporator (3) is arranged on the wall (RW).

6. Household appliance (D) according to one of the preceding claims, **characterised in that** the steam generation system (24) also has at least one steam inlet (14) for allowing steam (V) generated by the at least one evaporator (3) into a treatment space (G) of the household appliance (D) and the steam inlet (14) is arranged on an upper edge of a rear wall of a treatment space (G) of the domestic appliance (D) or on a ceiling of the treatment space (G).

7. Household appliance (D) according to claim 6, **characterized in that** the water supply has a water reservoir (17; 28) which is arranged on a different side of the domestic appliance (D) than the steam inlet (14).

8. Household appliance (D) according to one of the preceding claims, **characterised in that** the at least one evaporator (3) and at least one other unit (15; 28) of the steam generation system (21) are attached to a shared mounting support (22; 25) and the mounting support (22; 25) is fastened to the wall (RW), in particular the intermediate rear wall.

9. Household appliance (D) according to claim 8, **characterised in that** at least the at least one evaporator (3) and in addition at least the water throughput control facility (15) are attached to the shared mounting support.

10. Household appliance (D) according to one of claims 8 or 9, **characterised in that** at least the at least one evaporator (3) and in addition at least the water reservoir (28) are attached to the shared mounting support (25).

11. Method for mounting a steam generation system (24) for a domestic appliance (D), wherein the steam generation system (24)
- has at least one evaporator (3) in the form of a flow-through water heater, which can be supplied with water by a water supply (17; 28) and at least one water throughput control facility (15), by means of which a water flow from the water supply (17; 28) to the evaporator (3) can be controlled,
**characterised in that**
- the evaporator (3) has a substantially upright heating pipe, in which water to be heated is present, and which can be heated by a heater surrounding the same and
- the at least one evaporator (3) and at least one other element (7; 15; 28) of the steam generation system (24) are attached to a shared mounting support (22; 25) and the mounting support (22; 25) is then fastened to a wall (RW) of the domestic appliance (D).

12. Method according to claim 11, **characterised in that** the evaporator (3) and the at least one other element (7; 15; 28) of the steam generation system (24) are tested after being mounted on the shared mounting support (22; 25) and prior to being fastened to the wall (RW) of the domestic appliance (D).

13. Method according to one of claims 11 to 12, **characterised in that** the mounting support (22; 25) is screwed to the wall (RW) and/or locked in place with the wall (RW).

## Revendications

1. Appareil ménager (D) avec un système de génération de vapeur (24), présentant au moins
- une alimentation en eau (17, 23 ; 28) ;
- au moins un évaporateur (3) en forme de chauffe-eau instantané, qui peut être alimenté en liquide par l'alimentation en eau (17 ; 28), et
- au moins un dispositif de commande de passage d'eau (15), au moyen duquel un flux d'eau peut être commandé de l'alimentation en eau (17 ; 28) jusqu'à l'évaporateur (3),
- le système de génération de vapeur (24) s'étend au moins partiellement au niveau d'une paroi (RW) de l'appareil ménager (D) et y présente un parcours pour l'essentiel vertical en forme de V jusqu'à une forme de U et
- l'alimentation en eau présente un réservoir d'eau (17), l'au moins un évaporateur (3) étant disposé plus profondément que le réservoir d'eau (17) et l'admission de vapeur (14) de l'appareil ménager, le réservoir d'eau (17) étant disposé au-dessus de l'espace de traitement (G) de l'appareil ménager,
**caractérisé en ce que**
- l'évaporateur (3) présente un tube chauffant pour l'essentiel vertical, dans lequel se trouve de l'eau à chauffer et laquelle peut être chauffée par le biais d'un chauffage qui l'entoure.

2. Appareil ménager (D) selon l'une des revendications précédentes, **caractérisé en ce que** l'évaporateur (3) est disposé dans une zone de l'une des deux branches du parcours en forme de V jusqu'à une forme de U et l'alimentation en eau (17, 23 ; 28) est disposée au moins partiellement dans une zone d'une autre des branches du parcours en forme de V jusqu'à une forme de U.

3. Appareil ménager (D) selon la revendication 2, **caractérisé en ce que** l'alimentation en eau (17, 23 ; 28) comprend un canal d'eau en direction de l'évaporateur (3).

4. Appareil ménager (D) selon l'une des revendications précédentes, **caractérisé en ce que** la paroi (RW) est une paroi arrière intermédiaire.

5. Appareil ménager (D) selon la revendication 4, **caractérisé en ce qu'**au moins l'évaporateur (3) est disposé au niveau de la paroi (RW).

6. Appareil ménager (D) selon l'une des revendications précédentes, **caractérisé en ce que** le système de génération de vapeur (24) présente en outre au moins une admission de vapeur (14) pour une admission de vapeur (V) générée par le biais de l'au moins un évaporateur (3) dans un espace de traitement (G) de l'appareil ménager (D) et **en ce que** l'admission de vapeur (14) est disposée au niveau d'un bord supérieur d'une paroi arrière d'un espace de traitement (G) de l'appareil ménager (D) ou au niveau d'un couvercle de l'espace de traitement (G).

7. Appareil ménager (D) selon la revendication 6, **caractérisé en ce que** l'alimentation en eau présente un réservoir d'eau (17, 28) qui est disposé sur un autre côté de l'appareil ménager (D) en tant qu'admission de vapeur (14).

8. Appareil ménager (D) selon l'une des revendications précédentes, **caractérisé en ce que** l'au moins un évaporateur (3) et au moins une autre unité (15 ; 28) du système de génération de vapeur (21) sont installés au niveau d'un support de montage commun (22 ; 25) et le support de montage (22 ; 25) est fixé à la paroi (RW), en particulier une paroi arrière intermédiaire.

9. Appareil ménager (D) selon la revendication 8, **caractérisé en ce qu'**au moins l'au moins un évaporateur (3) et en outre au moins le dispositif de commande de passage d'eau (15) sont installés au niveau du support de montage commun.

10. Appareil ménager (D) selon l'une des revendications 8 ou 9, **caractérisé en ce qu'**au moins l'au moins un évaporateur (3) et en outre au moins le réservoir d'eau (28) sont installés au niveau du support de montage commun (25).

11. Procédé destiné au montage d'un système de génération de vapeur (24) pour un appareil ménager (D), le système de génération de vapeur (24)
- présentant au moins un évaporateur (3) en forme de chauffe-eau instantané, qui peut être alimenté en eau par une alimentation en eau (17 ; 28), et au moins un dispositif de commande de passage d'eau (15) au moyen duquel un flux d'eau peut être commandé de l'alimentation en eau (17 ; 28) jusqu'à l'évaporateur (3),
**caractérisé en ce que**
- l'évaporateur (3) présente un tube chauffant pour l'essentiel vertical, dans lequel se trouve de l'eau à chauffer et laquelle peut être chauffée par le biais d'un chauffage qui l'entoure et
- l'au moins un évaporateur (3) et au moins un autre élément (7 ; 15 ; 28) du système de génération de vapeur (24) sont installés au niveau d'un support de montage commun (22 ; 25) et le support de montage (22 ; 25) est fixé ensuite à une paroi (RW) de l'appareil ménager (D).

12. Procédé selon la revendication 11, **caractérisé en ce que** l'évaporateur (3) et l'au moins un autre élément (7 ; 15 ; 28) du système de génération de vapeur (24) sont testés après leur montage sur le support de montage commun (22 ; 25) et avant leur fixation à la paroi (RW) de l'appareil ménager (D).

13. Procédé selon l'une des revendications 11 à 12, **caractérisé en ce que** le support de montage (22 ; 25) est vissé à la paroi (RW) et/ou encliqueté avec la paroi (RW).
